# EUROPÄISCHE PATENTSCHRIFT

(11) **EP 2 315 810 B1**
(45) Veröffentlichungstag und Bekanntmachung des Hinweises auf die Patenterteilung: **02.10.2013**
(21) Anmeldenummer: 09777825.2
(22) Anmeldetag: 12.08.2009
(51) Int. Cl.: C08L 75/04, C08K 3/04

(54) **ANTISTATISCHE ODER ELEKTRISCH LEITFÄHIGE POLYURETHANE UND EIN VERFAHREN ZU DEREN HERSTELLUNG**
ANTISTATIC OR ELECTRICALLY CONDUCTIVE POLYURETHANES, AND METHOD FOR THE PRODUCTION THEREOF
POLYURÉTHANES ANTISTATIQUES OU ÉLECTROCONDUCTEURS ET PROCÉDÉ DE PRODUCTION

(30) Priorität: 20.08.2008 DE 102008038524
(43) Veröffentlichungstag der Anmeldung: 04.05.2011
(73) Patentinhaber: Bayer Intellectual Property GmbH, 40789 Monheim (DE)
(72) Erfinder: KRAUSE, Jens, 26540 Mours-Saint-Eusèbe (FR); BREUER, Bernd, 53937 Schleiden Morsbach (DE); HEINEMANN, Maren, 51467 Bergisch Gladbach (DE); JUMEL, Ralf, 51381 Leverkusen (DE)
(74) Vertreter: BIP Patents
(86) Internationale Anmeldenummer: PCT/EP2009/005840
(87) Internationale Veröffentlichungsnummer: WO 2010/020367

(56) Entgegenhaltungen:
- DE-A1-102006 037 582

## Beschreibung

Die Erfindung betrifft ein Verfahren zur Herstellung von antistatischen oder elektrisch leitfähigen duroplastischen Polyurethanen, insbesondere Gießelastomeren und Gießharzen, die leitfähige Kohlenstoff-Nanotubes enthalten und ihre Verwendung zur Herstellung von z.B. Beschichtungen, Rollen, Walzen und Rädern.

Polyurethane sind seit langem bekannt und zeichnen sich durch ihre große Vielfalt aus. Eine Übersicht über Polyurethane, ihre Eigenschaften und Anwendungen wird beispielsweise im Kunststoffhandbuch, Band 7, Polyurethane, 3. neu bearbeitete Auflage, Band 193, herausgegeben von Prof. Dr. G.W. Becker und Prof. Dr. D. Braun (Carl-Hanser-Verlag, München, Wien) gegeben.

Neben weichen und harten Schäumen sind auch nicht geschäumte, massive Polyurethane, wie z.B. Gießelastomere und Gießharze von Interesse. Besonders massive Polyurethane oder Polyurethane mit einer Rohdichte von > 500 kg/m³ finden in Bereichen Verwendung, wo es neben den herausragenden Materialeigenschaften auch auf antistatische oder elektrisch leitfähige Eigenschaften ankommt. Erwähnt seien hier Fußbodenbeläge, Reifen, lackierfähige Walzen, Rollen und Elektrovergussmaterialien. Gerade in einigen hochsensiblen technischen Ausrüstungen sind Aufladungen unbedingt zu vermeiden. Polyurethane sind ebenso wie auch die meisten anderen Polymere per se nicht leitfähig. Gängige Oberflächenwiderstände liegen im Bereich von 10¹³ Ohm.

Um diesen hohen Widerstand zu senken, sind zahlreiche Zusatzstoffe eingesetzt worden. Sehr früh wurden Salze, wie z.B. Ammoniumsalze (z.B. Catafor^{®} von der Firma Rhodia GmbH) verwendet, um den Oberflächenwiderstand zu senken. Leider haben diese Zusatzstoffe den Nachteil, bei Polyesterpolyol-basierten Polyurethanen die Hydrolyse zu beschleunigen. Ferner ist die Migration an die Oberflächen und damit einhergehend ein sogenanntes Kreiden ein großer Nachteil. Hinzu kommt, dass die erzielten Effekte vergleichsweise gering sind, und der Oberflächenwiderstand lediglich um 2 bis 3 Zehnerpotenzen erniedrigt wird.

Neben der Verwendung dieser Salze ist auch die Verwendung von leitfähigem Ruß (beispielsweise Leitruß mit einer Oberfläche von 600 bis 1200 m²/g nach BET; beispielsweise Ketjenblack^{®} von der Firma Akzo Nobel Polymer Chemicals bv) oder von Kohlenstofffasern bekannt. Die Verwendung von Leitruß ist beispielsweise in EP-A 0 129 193 und DE-A 3 528 597 beschrieben. Mit Leitrußen lassen sich gute Oberflächenwiderstände in geschäumten und nicht geschäumten Polyurethanen erzielen (bis zu 10⁴ Ohm). Allerdings ergibt sich durch die erforderlichen Mengen an Leitruß stets eine sehr hohe Viskosität der Reaktionskomponenten, so dass derartige Systeme mit den gängigen Polyurethan-Maschinen nicht mehr verarbeitet werden können. Technisch werden derartige Systeme daher kaum angewendet. Wesentlich niedrigere Viskositäten können durch Verwendung von Kohlenstofffasern - wie in DE-A 19 858 825 beschrieben - erreicht werden. Mit relativ hohen Konzentrationen Kohlenstofffasern werden bei gerade noch akzeptablen Verarbeitungsviskositäten Oberflächenwiderstände unter 10⁴ Ohm erreicht. Bei der Anwendung zeigt sich jedoch, dass bei mechanisch beanspruchten Teilen, die Fasern brechen und die Leitfähigkeit sehr schnell abnimmt bis wieder ein nicht leitfähiges Polyurethan vorliegt. Dieses Brechen der Fasern tritt bereits bei der Verarbeitung auf, so dass derartige PUR-Systeme großtechnisch keine Verwendung finden.

Ferner ist zur Reduzierung des elektrischen Widerstandes der Einsatz von Graphiten (z.B. Cond 8/96 der Firma Graphit Kopfmühl AG) denkbar. Um aber eine brauchbare Leitfähigkeit zu erhalten, wären Konzentrationen im Polyurethan-Reaktionssystem erforderlich, die eine erhebliche Viskositätserhöhung bedeuten würden und daher eine technische Verarbeitung ausschließen.

Nachteilig an der Einarbeitung von Carbon Nanotubes siehe auch DE 10 2006 037 582 A1 ist die schwierige Dispergierung sowie die hohe Verarbeitungsviskosität.

Aufgabe war es daher, ein Verfahren zur Herstellung elektrisch leitfähiger oder antistatischer Polyurethane zur Verfügung zu stellen, mit dem es gelingt, die Reaktionskomponenten zur Herstellung von Polyurethanen technisch zu verarbeiten; insbesondere sollte die Viskosität des Reaktionsgemisches während der Verarbeitung nicht ansteigen und die Leitfähigkeit des Polyurethanes durch Beanspruchung über die Zeit nicht abnehmen und eine feine, gleichmäßige Verteilung, insbesondere der Carbon Nanotubes vorliegen.

Diese Aufgabe konnte überraschenderweise durch ein besonderes Dispergierverfahren (Verfahren nach dem Rotor-Stator-Prinzip) unter Einsatz von Carbon Nanotubes in bestimmten Mengenverhältnissen gelöst werden.

Gegenstand der Erfindung ist ein Verfahren zur Herstellung von antistatischen oder elektrisch leitfähigen Teilen / Artikeln aus duroplastischen Polyurethanen, wobei das Polyurethan erhältlich ist durch Umsetzung von organischen Polyisocyanaten (A) mit NCO-reaktive Gruppen enthaltenden Verbindungen (B), gegebenenfalls unter Verwendung von Katalysatoren und gegebenenfalls unter Zugabe von Treibmitteln und Hilfs- und/oder Zusatzstoffen, welches dadurch gekennzeichnet ist, dass
a) Carbon Nanotubes den NCO-reaktive Gruppen enthaltenden Verbindungen (B) und/oder den Polyisocyanaten (A) in einer Menge von 0,1 bis 15 Gew.-%, bevorzugt 1 bis 10 Gew.-%, besonders bevorzugt 1 bis 3 Gew.-%, bezogen auf das Reaktionsgemisch aus Polyisocyanaten (A) und NCO-reaktive Gruppen enthaltenden Verbindungen (B) bei einer Leistungsdichte von 10² kW/m³ bis 10¹⁴ kW/m³, vorzugsweise von 10⁴ kW/m³ bis 10¹³ kW/m³ nach dem Rotor-Stator-Prinzip zugemischt werden, wobei die Carbon Nanotubes nach der Vermischung mit einem Anteil von 30 bis 90 Gew.-% mit einer Teilchengröße von <40 µm vorliegen und mit einem Anteil von 10 bis 70 Gew.-% mit einer Teilchengröße von 40 bis 1000 µm vorliegen, wobei mehr als 90% der groben Teilchen einen Durchmesser von 100 bis 200 µm aufweisen,
b) die Komponenten (A) und (B) miteinander zum Reaktionsgemisch vermischt werden, wobei (A) und/oder (B) Carbon Nanotubes aus Schritt a) enthalten,
c) das Reaktionsgemisch aus b) in eine Form eingetragen oder auf ein Substrat aufgetragen wird,
d) das Polyurethan ausgehärtet wird.

Die Leistungsdichte bezieht sich dabei auf den tatsächlich der Beanspruchung unterliegenden Raum der Suspension. Das bedeutet bei Rotor-Stator-Systemen der Kammerinhalt, bei Düsensystemen das Volumen der Bohrung und bei Dissolverscheiben (Zahnscheiben) der Raum in unmittelbarer Nähe der Scheibe.

Die Abmischung unter a) wird nach dem Rotor-Stator-Prinzip durchgeführt.

Die so erhaltenen antistatischen oder elektrisch leitfähigen, duroplastischen Polyurethane, erhältlich durch Umsetzung von organischen Polyisocyanaten (A) mit NCO-reaktive Gruppen enthaltenden Verbindungen (B), gegebenenfalls unter Zugabe von Katalysatoren, gegebenenfalls Treibmitteln und Hilfs- und/oder Zusatzstoffen, enthalten Carbon Nanotubes in einer Menge von 0,1 bis 15 Gew.-%, vorzugsweise 1 bis 10 Gew.-%, besonders bevorzugt 1 bis 3 Gew.-%, bezogen auf das Gesamtgewicht an Polyurethan.

Carbon Nanotubes, die im erfindungsgemäßen Verfahren eingesetzt werden, liegen als Agglomerate mit einem Durchmesser von 100 bis 1000 µm vor. Die Dispergierung unter Schritt a) im erfindungsgemäßen Verfahren erfolgt vorzugsweise in Dispergieraggregaten mit hohem lokalem Energieeintrag, bevorzugt mittels Dispergierscheiben und Rotor-Stator-Systemen, z.B. Kolloidmühlen, Zahndispergiermaschinen usw..

Das Rotor-Stator-Prinzip ist eine an sich bekannte Technik, mit der unter hohen Scherkräften Füllstoffe oder dergleichen in flüssigen Medien gleichmäßig verteilt werden. Mit den Rotor-Stator-Maschinen können feste und flüssige Medien in einer flüssigen Matrix dispergiert werden. Die Technik und die verwendeten Maschinen werden ausführlich in Rotor-Stator and Disc Systems for Emulsification Processes; Kai Urban, Gerhard Wagner, David Schaffner, Danny Röglin, Joachim Ulrich; Chemical Engineering & Technology, 2006, Vol. 29, Nr. 1, Seiten 24 bis 31; DE-A 10 2005 006 765, DE-A 197 20 959 und US 3 054 565 beschrieben.

Das Reaktionsgemisch aus den Komponenten und den Carbon Nanotubes zur Herstellung der Polyurethane zeigt eine ausreichend niedrige Viskosität, die sich auch über einen längeren Zeitraum und während der Verarbeitung nicht oder kaum erhöht, so dass das Gemisch technisch gut verarbeitbar ist. Auch bleibt die Leitfähigkeit der erfindungsgemäßen Polyurethane unter Beanspruchung erhalten.

Die Polyurethane haben bevorzugt Rohdichten von 200 kg/m³ bis 1400 kg/m³, besonders bevorzugt von 600 kg/m³ bis 1400 kg/m³ und ganz besonders bevorzugt von 800 kg/m³ bis 1400 kg/m³.

Massive Polyurethane, z.B. Gießelastomere und Gießharze sind bevorzugt.

Die für die Herstellung von Polyisocyanat-Polyadditionsverbindungen, insbesondere Polyurethanen geeigneten Polyisocyanate sind die dem Fachmann an sich bekannten organischen aliphatischen, cycloaliphatischen, aromatischen oder heterocyclischen Polyisocyanate mit mindestens zwei Isocyanatgruppen pro Molekül sowie Gemische davon. Beispiele für geeignete aliphatische bzw. cycloaliphatische Polyisocyanate sind Di- oder Triisocyanate, wie z.B. Butandiisocyanat, Pentandiisocyanat, Hexandiisocyanat (Hexamethylendiisocyanat, HDI), 4-Isocyanatomethyl-1,8-octandiisocyanat (Triisocyanatononan, TIN) und cyclische Systeme, wie z.B. 4,4'-Methylen-bis(cyclohexylisocyanat), 3,5,5-Trimethyl-1-isocyanato-3-isocyanatomethylcyclohexan (Isophorondiisocyanat, IPDI), sowie ω.ω'-Diisocyanato-1,3-dimethylcyclohexan (H₆XDI). Als aromatische Polyisocyanate können z.B. 1,5-Naphthalendiisocyanat, Diisocyanatodiphenylmethan (2,2', 2,4'-und 4,4'-MDI oder Mischungen daraus), Diisocyanatomethylbenzol (2,4- und 2,6-Toluylendiisocyanat, TDI) und technische Gemische der beiden Isomeren sowie 1,3-Bis(isocyanatomethyl)-benzol (XDI) eingesetzt werden. Des Weiteren können TODI (3.3'-Dimethyl-4.4'-biphenyldiiso-cyanat), PPDI (1,4-paraphenylendiisocyanat) und CHDI (Cyclohexyldiisocyanat) verwendet werden.

Überdies können aber auch die an sich bekannten Folgeprodukte der vorgenannten organischen aliphatischen, cycloaliphatischen, aromatischen oder heterocyclischen Polyisocyanate mit Carbodiimid, Uretdion-, Allophanat-, Biuret- und/oder Isocyanurat-Struktur, sowie Prepolymere, die durch Umsetzung des Polyisocyanats mit Verbindungen mit gegenüber Isocyanatgruppen reaktiven Gruppen erhalten werden, eingesetzt werden.

Die Polyisocyanatkomponente kann in einem geeigneten Lösemittel vorliegen. Geeignete Lösemittel sind solche, die eine ausreichende Löslichkeit der Polyisocyanatkomponente aufweisen und frei von gegenüber Isocyanaten reaktiven Gruppen sind. Beispiele für solche Lösemittel sind Aceton, Methylethylketon, Cyclohexanon, Methylisobutylketon, Methylisoamylketon, Diisobutylketon, Ethylacetat, n-Butylacetat, Ethylenglykoldiacetat, Butyrolacton, Diethylcarbonat, Propylencarbonat, Ethylencarbonat, N,N-Dimethylformamid, N,N-Dimethylacetamid, N-Methylpyrrolidon, N-Ethylpyrrolidon, Methylal, Ethylal, Butylal, 1,3-Dioxolan, Glycerolformal, Benzol, Toluol, n-Hexan, Cyclohexan, Solventnaphtha, 2-Methoxypropylacetat (MPA).

Die Isocyanatkomponente kann darüber hinaus übliche Hilfs- und Zusatzmittel, wie z.B. Rheologieverbesserer (zum Beispiel Ethylencarbonat, Propylencarbonat, dibasische Ester, Zitronensäureester), Stabilisatoren (zum Beispiel Broenstedt- und Lewis-Säuren, wie etwa Salzsäure, Phosphorsäure, Benzoylchlorid, Organomineralsäuren wie Dibutylphosphat, weiterhin Adipinsäure, Äpfelsäure, Bernsteinsäure, Traubensäure oder Zitronensäure), UV-Schutzmittel (zum Beispiel 2,6-Dibutyl-4-methylphenol), Hydrolyseschutzmittel (zum Beispiel sterisch gehinderte Carbodiimide), Emulgatoren sowie Katalyatoren (zum Beispiel Trialkylamine, Diazabicyclooctan, Zinndioctoat, Dibutylzinndilaurat, N-Alkylmorpholin, Blei-, Zink-, Zinn-, Kalzium-, Magnesiumoctoat, die entsprechenden Naphthenate und p-Nitrophenolat und/oder auch Quecksilberphenylneodecanoat) und Füllstoffe (zum Beispiel Kreide), gegebenenfalls in das/den später zu bildende/n Polyurethan/Polyharnstoff einbaufähige Farbstoffe (die also über zerewitinoff-aktive Wasserstoffatome verfügen) und/oder Farbpigmente enthalten.

Als NCO-reaktive Verbindungen können alle dem Fachmann bekannten Verbindungen eingesetzt werden.

Als NCO-reaktive Verbindungen können Polyetherpolyole, Polyesterpolyole, Polycarbonatpolyole und Polyetheramine, welche eine mittlere OH- bzw. NH-Funktionalität von mindestens 1,5 aufweisen, sowie kurzkettige Polyole und Polyamine (Kettenverlängerer oder Vernetzer), wie sie aus dem Stand der Technik hinlänglich bekannt sind. Dies können beispielsweise niedermolekulare Diole (z.B. 1,2-Ethandiol, 1,3- bzw. 1,2 Propandiol, 1,4-Butandiol), Triole (z.B. Glycerin, Trimethylolpropan) und Tetraole (z.B. Pentaerythrit) sein, aber auch höhermolekulare Polyhydroxyverbindungen wie Polyetherpolyole, Polyesterpolyole, Polycarbonatpolyole, Polysiloxanpolyole, Polyaminen und Polyetherpolyaminen sowie Polybutadienpolyole.

Polyetherpolyole sind in an sich bekannter Weise durch Alkoxylierung von geeigneten Starter-Molekülen unter Basenkatalyse oder Einsatz von Doppelmetallcyanidverbindungen (DMC-Verbindungen) zugänglich. Geeignete Starter-Moleküle für die Herstellung von Polyetherpolyolen sind beispielsweise einfache, niedermolekulare Polyole, Wasser, organische Polyamine mit mindestens zwei N-H-Bindungen oder beliebige Gemische derartiger Starter-Moleküle. Bevorzugte Starter-Moleküle zur Herstellung von Polyetherpolyolen durch Alkoxylierung, insbesondere nach dem DMC-Verfahren, sind insbesondere einfache Polyole wie Ethylenglykol, Propylenglykol-1,3- und Butandiol-1,4, Hexandiol-1,6, Neopentylglykol, 2-Ethylhexandiol-1,3, Glyzerin, Trimethylolpropan, Pentaerythrit sowie niedermolekulare, Hydroxylgruppen aufweisende Ester derartiger Polyole mit Dicarbonsäuren der nachstehende beispielhafte genannten Art oder niedermolekulare Ethoxylierungs- oder Propoxylierungsprodukte derartiger einfacher Polyole oder beliebige Gemische derartiger modifizierter oder nicht modifizierter Alkohole. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können.

Polyesterpolyole können in bekannter Weise durch Polykondensation von niedermolekularer Polycarbonsäurederivaten, wie beispielsweise Bernsteinsäure, Adipinsäure, Korksäure, Azelainsäure, Sebacinsäure, Dodekandisäure, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure, Trimerfettsäure, Phthalsäure, Phthalsäureanhydrid, Isophthalsäure, Terephthalsäure, Zitronensäure oder Trimellithsäure, mit niedermolekularen Polyolen, wie beispielsweise Ethylenglykol, Diethylenglykol, Neopentylglykol, Hexandiol, Butandiol, Propylenglykol, Glycerin, Trimethylolpropan 1,4-Hydroxymethylcyclohexan, 2-Methyl-1,3-propandiol, Butantriol-1,2, 4, Triethylenglykol, Tetraethylenglykol, Polyethylenglykol, Dipropylenglykol, Polypropylenglykol, Dibutylenglykol und Polybutylenglykol, oder durch Ring öffnende Polymerisation cyclischer Carbonsäureester, wie ε-Caprolacton, herstellen. Darüber hinaus lassen sich auch Hydroxycarbonsäurederivate, wie beispielsweise Milchsäure, Zimtsäure oder ω-Hydroxycapronsäure zu Polyesterpolyolen polykondensieren. Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden.

Die Herstellung geeigneter Polyacrylatpolyole ist dem Fachmann an sich bekannt. Sie werden durch radikalische Polymerisation von Hydroxylgruppen aufweisenden, olefinisch ungesättigte Monomeren oder durch radikalische Kopolymiersation von Hydroxylgruppen aufweisenden, olefinisch ungesättigten Monomeren mit gegebenenfalls anderen olefinisch ungesättigten Monomeren, wie z. B. Ethylacrylat, Butylacrylat, 2-Ethylhexylacrylat, Isobornylacrylat, Methylmethacrylat, Ethylmethacrylat, Butylmethacrylat, Cyclohexylmethacrylat, Isobornylmethacrylat, Styrol, Acrylsäure, Acrylnitril und/oder Methacrylnitril erhalten. Geeignete Hydroxylgruppen aufweisende, olefinisch ungesättigte Monomere sind insbesondere 2-Hydroxyethyl-acrylat, 2-Hydroxyethyl-methacrylat, das durch Anlagerung von Propylenoxid an Acrylsäure erhältliche Hydroxypropyl-acrylat-Isomerengemisch sowie das durch Anlagerung von Propylenoxid an Methacrylsäure erhältliche Hydroxypropyl-methacrylat-Isomerengemisch. Geeignete Radikalinitiatoren sind die aus der Gruppe der Azoverbindungen, wie zum Beispiel Azoisobutyronitril (AIBN), oder aus der Gruppe der Peroxide, wie beispielsweise Di-tert.-Butylperoxid.

Die NCO-reaktive Verbindung kann in einem geeigneten Lösemittel vorliegen. Geeignete Lösemittel sind solche, die eine ausreichende Löslichkeit für die NCO-reaktive Verbindung aufweisen. Beispiele für solche Lösemittel sind Aceton, Methylethylketon, Cyclohexanon, Methylisobutylketon, Methylisoamylketon, Diisobutylketon, Ethylacetat, n-Butylacetat, Ethylenglykoldiacetat, Butyrolacton, Diethylcarbonat, Propylencarbonat, Ethylencarbonat, N,N-Dimethylformamid, N,N-Dimethylacetamid, N-Methylpyrrolidon, N-Ethylpyrrolidon, Methylal, Ethylal, Butylal, 1,3-Dioxolan, Glycerolformal, Benzol, Toluol, n-Hexan, Cyclohexan, Solventnaphtha, 2-Methoxypropylacetat (MPA). Darüber hinaus können die Lösemittel auch gegenüber Isocyanaten reaktive Gruppen tragen. Beispiele für solche Reaktivlösemittel sind solche, die eine mittlere Funktionalität gegenüber Isocyanaten reaktiver Gruppen von mindestens 1,8 aufweisen. Dies können beispielsweise niedermolekulare Diole (z.B. 1,2-Ethandiol, 1,3- bzw. 1,2 Propandiol, 1,4-Butandiol), Triole (z.B. Glycerin, Trimethylolpropan), sein aber auch niedermolekulare Diamine, wie zum Beispiel Polyasparaginsäureester.

Die als NCO-reaktive Verbindung einsetzbaren Polyetheramine sind insbesondere Diamine oder Triamine. Derartige Verbindungen werden beispielsweise von der Firma Huntsman unter der Bezeichnung Jeffamine® bzw. von der Firma BASF als Polyetheramine vertrieben.

Die NCO-reaktive Verbindung kann als Vernetzerkomponente bzw. Kettenverlängerer kurzkettige Polyole bzw. Polyamine enthalten. Typische Kettenverlängerer sind Diethylentoluoldiamin (DETDA), 4,4'-Methylenbis-(2,6-diethyl)-anilin (MDEA), 4,4'-Methylenbis-(2,6-diisopropyl)-anilin (MDIPA), 4,4'-Methylen-bis-(3-chloro, 2,6-diethyl)-anilin (MCDEA), Dimethylthiotoluoldiamin (DMTDA, Ethacure® 300), N,N'-Di(sec-butyl)-amino-biphenylmethan (DBMDA, Unilink^{®} 4200) oder N,N'-Di-sec-butyl-p-phenylendiamin (Unilink® 4100), 3,3'-Dichloro-4,4'-di-amino-diphenylmethan (MBOCA), Trimethylenglykol-di-p-aminobenzoat (Polacure 740M). Aliphatische aminische Kettenverlängerer können ebenfalls eingesetzt oder mitverwendet werden. 1,3-Propandiol, 1,4-Butandiol, 2,3-Butandiol, 1,5-Pentandiol, 1,6-Hexandiol und HQEE (Hydrochinon-di(β-hydroxyethyl)ether).

Das Verfahren zur Herstellung der Polyisocyanat-Polyadditionsprodukte kann in Gegenwart üblicher Rheologieverbesserer, Stabilisatoren, UV-Schutzmittel, Katalyatoren, Hydrolyseschutzmittel, Emulgatoren, Füllstoffen, gegebenenfalls einbaufähigen Farbstoffen (die also über zerewitinoff-aktive Wasserstoffatome verfügen) und/oder Farbpigmenten durchgeführt werden. Bevorzugt ist auch eine Zugabe von Zeolithen.

Bevorzugte Hilfs- und Zusatzmittel sind Treibmittel, Füllstoffe, Kreide, Ruß, Flammschutzmittel, Farbpasten, Wasser, Mikrobenschutzmittel, Fließverbesserer, Thioxotropiermittel, Oberflächenmodifizierungsmittel, Verzögerer bei der Herstellung der Polyisocyanat-Polyadditions-Produkte. Weitere Hilfs- und Zusatzstoffe umfassen Entschäumer, Schaumstabilisatoren, Zellregler und Füllstoffe. Typische Treibmittel sind Fluorkohlenwasserstoffe, Pentan, Cylclopentan, Wasser und/oder Kohlenstoffdioxid.

Die erfindungsgemäß hergestellten Polyurethane können Füllstoffe, wie z.B. Kreiden, Silikate, Dolomite und Aluminiumhydroxide enthalten. Diese in der Polyurethan-Chemie bekannten Füllstoffe können in Konzentrationen von bis zu 25 Gew.-%, bezogen auf das Polyurethan, vorliegen. Auch können diese zusätzliche, die Leitfähigkeit erhöhende Additive, wie z.B. Leitruß und/oder Kohlefasern enthalten. Der leitfähige Ruß weist vorzugsweise eine Oberfläche (gemessen nach der BET-Methode gemäß ASTM D 6556-04) von 600 bis 1200 m²/g, ein Absorptionsporenvolumen (gemäß ASTM D 2414-05a mit dem Absorptionsmittel n-Dibutylphthalat bei etwa 23°C) von 300 bis 450 cm³/100 g Ruß, eine Perldichte (gemäß ASTM D 1513-05) von 20 bis 250 kg/m³ und einen durchschnittlichen Teilchengrößendurchmesser von weniger als 50 nm auf. Die Kohlenstofffasern weisen bevorzugt einen Dickendurchmesser von 2 µm bis 10 µm auf.

Eine Übersicht über Polyurethane, ihre Eigenschaften und Anwendungen wird beispielsweise im Kunststoffhandbuch, Band 7, Polyurethane, 3. neu bearbeitete Auflage, Band 193, herausgegeben von Prof. Dr. G.W. Becker und Prof. Dr. D. Braun (Carl-Hanser-Verlag, München, Wien) gegeben.

Überraschend wurde gefunden, dass durch die Einarbeitung der Carbon Nanotubes über ein Rotor-Stator-System elektrisch leitfähige oder antistatische Polyurethane hergestellt werden können, wobei keine Probleme bei der Verarbeitung des Reaktionsgemisches auftreten. Die Viskositäten der zu verarbeitenden Reaktionskomponenten sind trotz der vorhandenen Carbon Nanotubes niedrig, und bereits bei geringen Mengen an Carbon Nanotubes wird eine gute Leitfähigkeit (Oberflächenwiderstand von vorzugsweise < 10⁷ Ohm) erhalten.

Die Polyurethane können geschäumt oder massiv sein.

Die Polyurethane werden beispielsweise für lackierfähige, elektrisch abschirmende oder elektrostatisch ableitende Materialien, wie z.B. für Fußbodenbeläge, Reifen, Räder, Walzen, Rollen, Elektrovergussmaterialien , Gehäuseteile und sonstige technische Teile / Artikel verwendet.

Unter Kohlenstoff-Nanoröhrchen (Carbon Nanotubes) werden nach dem Stand der Technik hauptsächlich zylinderförmige Kohlenstoffröhren mit einem Durchmesser zwischen 3 und 100 nm verstanden und einer Länge, die ein Vielfaches des Durchmessers beträgt. Diese Röhrchen bestehen aus einer oder mehreren Lagen geordneter Kohlenstoffatome und weisen einen in der Morphologie unterschiedlichen Kern auf. Diese Kohlenstoff-Nanoröhrchen werden beispielsweise auch als "carbon fibrils" oder "hollow carbon fibres" bezeichnet.

In der Fachliteratur sind Kohlenstoff-Nanoröhrchen seit langem bekannt. Obwohl Iijima (Publi-kation: S. Iijima, Nature 354, 56-58, 1991) allgemein als Entdecker der Nanotubes bezeichnet wird, sind diese Materialien, insbesondere faserförmige Graphitmaterialien mit mehreren Graphitschichten, schon seit den 70er bzw. frühen 80er Jahren bekannt. Tates und Baker (GB 1 469 930 A1, 1977 und EP 56004 A2) beschrieben erstmals die Abscheidung von sehr feinem faserförmigen Kohlenstoff aus der katalytischen Zersetzung von Kohlenwasserstoffen. Allerdings werden die auf Basis kurzkettiger Kohlenwasserstoffe hergestellten Kohlenstoff-Filamente nicht näher in Bezug auf ihren Durchmesser charakterisiert.

Übliche Strukturen dieser Kohlenstoff-Nanoröhrchen sind solche vom Zylinder Typ. Bei den zylindrischen Strukturen unterscheidet man zwischen den einwandigen Monokohlenstoff-Nanoröhrchen (Single Wall Carbon Nano Tubes) und den mehrwandigen zylindrischen Kohlenstoff-Nanoröhrchen (Multi Wall Carbon Nano Tubes). Gängige Verfahren zu ihrer Herstellung sind z.B. Lichtbogenverfahren (arc discharge), Laser Ablation (laser ablation), Chemische Abscheidung aus der Dampfphase (CVD-process) und Katalytisch Chemische Abscheidung aus der Dampfphase (CCVD-process).

Aus Iijima, Nature 354, 1991, 56-8 ist die Bildung von Kohlenstoffröhrchen im Lichtbogenverfahren bekannt, die aus zwei oder mehr Graphitlagen bestehen und zu einem nahtlos geschlossen Zylinder aufgerollt und ineinander geschachtelt sind. Abhängig vom Aufrollvektor sind chirale und achirale Anordnungen der Kohlenstoffatome im Verhältnis zu der Längsachse der Kohlenstofffaser möglich.

Strukturen von Kohlenstoffröhrchen, bei denen eine einzelne zusammenhängende Graphitlagen (sogenannter scroll type) oder unterbrochene Graphitlagen (sogenannter onion type) die Basis für den Aufbau der Nanoröhre ist, wurden erstmals von Bacon et al., J. Appl. Phys. 34, 1960, 283-90, beschrieben. Die Struktur wird als Scroll Type bezeichnet. Später wurden entsprechende Strukturen auch von Zhou et al., Science, 263, 1994, 1744-47 und von Lavin et al., Carbon 40, 2002, 1123-30 gefunden.

Kohlenstoff-Nanoröhrchen im Sinne der Erfindung sind alle einwandigen oder mehrwandigen Kohlenstoff-Nanoröhrchen vom Zylinder-Typ, Scroll-Typ oder mit zwiebelartiger Struktur. Bevorzugt sind mehrwandige Kohlenstoff-Nanoröhrchen vom Zylinder-Typ, Scroll-Typ oder deren Mischungen einzusetzen.

Besonders bevorzugt werden Kohlenstoffnanoröhrchen mit einem Verhältnis von Länge zu Außendurchmesser von größer 5, bevorzugt größer 100 verwendet.

Die Kohlenstoff-Nanoröhrchen werden besonders bevorzugt in Form von Agglomeraten eingesetzt, wobei die Agglomerate insbesondere einen mittleren Durchmesser im Bereich von 0,05 bis 5 mm, bevorzugt 0,1 bis 2 mm, besonders bevorzugt 0,2 bis 1 mm haben.

Die einzusetzenden Kohlenstoff-Nanoröhrchen weisen besonders bevorzugt im Wesentlichen einen mittleren Durchmesser von 3 bis 100 nm, bevorzugt 5 bis 80 nm, besonders bevorzugt 6 bis 60 nm auf.

Neben den CNTs vom Scroll-Typ mit nur einer durchgehenden oder unterbrochenen Graphitlage gibt es auch CNT-Strukturen, die aus mehreren Graphitlagen bestehen, die zu einem Stapel zusammengefasst und aufgerollt vorliegen (Multiscroll-Typ). Diese CNT-Struktur verhält sich zu den Kohlenstoff-Nanoröhrchen vom einfachen Scroll-Typ vergleichsweise wie die Struktur mehrwandiger zylindrischer Monokohlenstoff-Nanoröhrchen (cylindrical MWNT) zur Struktur der einwandigen zylindrischen Kohlenstoff-Nanoröhrchen (cylindrical SWNT).

Die heute bekannten Methoden zur Herstellung von Carbon Nanotubes umfassen Lichtbogen-, Laserablations- und katalytische Verfahren. Bei vielen dieser Verfahren werden Ruß, amorpher Kohlenstoff und Fasern mit hohem Durchmesser als Nebenprodukte gebildet. Bei den katalytischen Verfahren kann zwischen der Abscheidung an geträgerten Katalysatorpartikeln und der Abscheidung an in-situ gebildeten Metallzentren mit Durchmessern im Nanometerbereich (sogenannte Flow-Verfahren) unterschieden werden. Bei der Herstellung über die katalytische Abscheidung von Kohlenstoff aus bei Reaktionsbedingungen gasförmigen Kohlenwasserstoffen (im Folgenden CCVD; Catalytic Carbon Vapour Deposition) werden als mögliche Kohlenstoffspender Acetylen, Methan, Ethan, Ethylen, Butan, Buten, Butadien, Benzol und weitere, Kohlenstoff enthaltende Edukte genannt. Bevorzugt werden daher CNTs erhältlich aus katalytischen Verfahren eingesetzt.

Die Katalysatoren beinhalten in der Regel Metalle, Metalloxide oder zersetzbare bzw. reduzierbare Metallkomponenten. Beispielsweise sind im Stand der Technik als Metalle für den Katalysator Fe, Mo, Ni, V, Mn, Sn, Co, Cu und weitere Nebengruppenelemente genannt. Die einzelnen Metalle haben meist zwar eine Tendenz, die Bildung von Kohlenstoff-Nanoröhrchen zu unterstützen, aller-dings werden laut Stand der Technik hohe Ausbeuten und geringe Anteile amorpher Kohlenstoffe vorteilhaft mit solchen Metallkatalysatoren erreicht, die auf einer Kombination der oben genannten Metalle basieren. CNTs erhältlich unter Verwendung von Mischkatalysatoren sind folglich bevorzugt einzusetzen.

Besonders vorteilhafte Katalysatorsysteme zur Herstellung von CNTs basieren auf Kombinationen von Metallen oder Metallverbindungen, die zwei oder mehr Elemente aus der Reihe Fe, Co, Mn, Mo und Ni enthalten.

Die Bildung von Kohlenstoff-Nanoröhrchen und die Eigenschaften der gebildeten Röhrchen hängen erfahrungsgemäß in komplexer Weise von der als Katalysator verwendeten Metallkomponente oder einer Kombination mehrerer Metallkomponenten, dem gegebenenfalls verwendeten Katalysatorträgermaterial und der Wechselwirkung zwischen Katalysator und Träger, dem Eduktgas und -partialdruck, einer Beimischung von Wasserstoff oder weiteren Gasen, der Reaktionstemperatur und der Verweilzeit bzw. dem verwendeten Reaktor ab.

Ein besonders bevorzugt einzusetzendes Verfahren zur Herstellung von Kohlenstoff-Nanoröhrchen ist aus der WO 2006/050903 A2 bekannt.

In den genannten unterschiedlichen Verfahren unter Einsatz verschiedener Katalysatorsysteme werden Kohlenstoff-Nanoröhrchen verschiedener Strukturen hergestellt, die aus dem Prozess überwiegend als Kohlenstoff-Nanoröhrchen-Pulver entnommen werden können.

Die Herstellung von Kohlenstoff-Nanoröhrchen mit Durchmessern kleiner 100 nm ist erstmals in EP-B 205 556 beschrieben. Für die Herstellung werden hier leichte (d. h. kurz- und mittelkettige aliphatische oder ein- oder zweikernige aromatische) Kohlenwasserstoffe und ein auf Eisen basierender Katalysator eingesetzt, an dem Kohlenstoffträgerverbindungen bei einer Temperatur oberhalb von 800 bis 900°C zersetzt werden.

Die WO 86/03455 A1, beschreibt die Herstellung von Kohlenstoff-Filamenten, die eine zylindrische Struktur mit einem konstanten Durchmesser von 3,5 bis 70 nm aufweisen, einem Aspektverhältnis (Verhältnis von Länge zu Durchmesser) von größer 100 und einer Kernregion. Diese Fibrilen bestehen aus vielen, durchgängigen Lagen geordneter Kohlenstoffatome, die konzentrisch um die zylindrische Achse der Fibrilen angeordnet sind. Diese zylinderartigen Nanotubes wurden nach einem CVD-Prozess aus kohlenstoffhaltigen Verbindungen mittels eines metallhaltigen Partikels bei einer Temperatur zwischen 850°C und 1200°C hergestellt.

Aus der WO 2007/093337 A2 ist ein Verfahren zur Herstellung eines Katalysators bekannt geworden, der für die Herstellung von konventionellen Carbon Nanotubes mit zylindrischer Struktur geeignet ist. Bei Verwendung dieses Katalysators in einem Festbett werden höhere Ausbeuten von zylindrischen Kohlenstoff-Nanoröhrchen mit einem Durchmesser im Bereich von 5 bis 30 nm gewonnen.

Ein völlig anderer Weg zur Herstellung zylindrischer Kohlenstoff-Nanoröhrchen wurde von Oberlin, Endo und Koyam beschrieben (Carbon 14, 1976, 133). Dabei werden aromatische Kohlenwasserstoffe, z.B. Benzen, an einem Metallkatalysator umgesetzt. Die entstandene Kohlenstoffröhre zeigt einen gut definierten, graphitischen hohlen Kern der ungefähr den Durchmesser des Katalysatorpartikels hat, auf dem sich weiterer weniger graphitisch geordneter Kohlenstoff befindet. Die gesamte Röhre kann durch Behandlung bei hoher Temperatur (2500°C bis 3000°C) graphitisiert werden.

Die meisten der oben genannten Verfahren (mit Lichtbogen, Sprühpyrolyse bzw. CVD) werden heute zur Herstellung von Carbon Nanotubes genutzt. Die Herstellung einwandiger zylindrischer Kohlenstoff-Nanoröhrchen ist jedoch apparativ sehr aufwendig und verläuft nach den bekannten Verfahren mit sehr geringer Bildungsgeschwindigkeit und oft auch mit vielen Nebenreaktionen, die zu einem hohen Anteil an unerwünschten Verunreinigungen führen, d.h. die Ausbeute solcher Verfahren ist vergleichsweise gering. Deshalb ist die Herstellung derartiger Carbon Nanotubes auch heute noch extrem technisch aufwendig und sie kommen daher vor allem für hoch spezialisierte Anwendungen in geringen Mengen zum Einsatz. Ihre Anwendung ist für die vorliegende Erfindung denkbar, aber weniger bevorzugt als die Anwendung von mehrwandigen CNTs vom Zylinder- oder Scroll-Typ.

Die Herstellung von mehrwandigen Carbon Nanotubes, in Form von ineinander geschachtelten nahtlosen zylindrischen Nanotubes oder auch in Form der beschriebenen Scroll- oder Onion-Strukturen erfolgt heute kommerziell in größeren Mengen überwiegend unter Verwendung katalytischer Verfahren. Diese Verfahren zeigen üblicherweise eine höhere Ausbeute als die oben genannten Lichtbogen- und andere Verfahren und werden heute typischerweise im kg-Maßstab (einige hundert Kilo/Tag weltweit) durchgeführt. Die so hergestellten MW-Carbon Nanotubes sind in der Regel um einiges kostengünstiger als die einwandigen Nanotubes.

Die Erfindung soll anhand der nachfolgenden Beispiele näher erläutert werden.

### Beispiele

### Ausgangskomponenten:

- Polyol:: Polyesterpolyol mit einer OH-Zahl von 50 mg KOH/mg und einer Viskosität von 1300 mPas bei 75°C
- Vernetzer:: 1,4-Butandiol mit Aktivator Dabco^{®} DC 2 (Fa. Air Products) [40 ppm]
- Isocyanant:: Desmodur^{®} PC-N (Gemisch eines Prepolymers auf Basis von 4,4'-Diphenyl-methandiisocyanat und Tripropylenglycol sowie eines carbodiimidmodifizierten 4,4'-Diphenylmethandiisocyanates mit einem NCO-Gehalt von 26 Gew.-% und einer Viskosität von 120 mPas bei 25°C)

Die vorgenannten drei Komponenten wurden so miteinander vermischt, dass die Kennzahl 103 betrug, wobei das Polyol eine Temperatur von 80°C und das Isocyanat und der Vernetzer eine Temperatur von 25°C aufwiesen. Die Formtemperatur betrug 110°C.

### Beispiel 1 (Vergleich):

In jeweils 100 Gew.-Teile Polyol und 50,5 Gew.-Teile Isocyanat wurden 1,5 Gew.-Teile Baytubes^{®} C 150 P gegeben und mittels eines Pendraulikrührers 90 Sekunden bei einer Drehzahl von 4500 U/min gerührt. Nach der Dispergierung lag die überwiegende Anzahl der Carbon Nanotubes in Form von Agglomeraten von größer als 0,5 mm vor. Es lag nur ein sehr geringer Feinanteil vor. Anschließend wurden die beiden vorgenannten, Baytubes^{®} C 150 P enthaltenden Komponenten mit 9,5 Gew.-Teilen Vernetzer vermischt und in eine Form gegossen.

Es konnte keine Leitfähigkeit gemessen werden (Widerstand > 10¹³ Ohm).

### Beispiel 2 (Erfindung):

In jeweils 100 Gew.-Teile Polyol und 50,5 Gew.-Teile Isocyanat wurden jeweils getrennt voneinander 1,5 Teile Baytubes^{®} C 150 P mit einem Rotor-Stator-System (Labor-Intensivdissolver CD 1000 der Firma Cavitron v. Hagen & Funke GmbH. Bei dem verwendeten Mischkopf des Rotor-Stator-Systems handelt es sich um ein Zahnkranz-System. Die Firma Cavitron bezeichnet es als Kammer-System.) eingearbeitet. Dazu wurde das Polyol zunächst in einem Autoklaven vorgelegt und auf 80°C erhitzt. Unter Rühren wurden die Baytubes^{®} C 150 P hinzugefügt. Mit einem Vordruck von 3 bar wurde das Gemisch dem Rotor-Stator-System zugeführt. Die Dispergierung erfolgte bei einer Drehzahl von 1750 bis 2350 Umdrehungen pro Minute. Die Dispergierung wurde ein Mal wiederholt. Für die Dispergierung der im Isocyanat wurde das Isocyanat bei Raumtemperatur vorgelegt und unter Rühren wurden die Baytubes^{®} C 150 P hinzugefügt. Mit einem Vordruck von 3 bar wurde das Gemisch dem Rotor-Stator-System zugeführt. Die Dispergierung erfolgte bei einer Drehzahl von 4650 bis 5250 Umdrehungen pro Minute. Die Dispergierung im Rotor-Stator-System wurde ein Mal durchgeführt. Die maximale Teilchengröße der Agglomerate in den Dispersionen betrug 200 µm mit einem hohen Feinanteil. Die Viskosität wurde nach EN ISO 3219/A.3 bei 70°C an den jeweiligen Suspensionen gemessen. Für das Polyol wurden 2800 mPas und für das Isocyanat 200 mPas gemessen. Anschließend wurden die Polyol-Dispersion und die Isocyanat-Dispersion mit 9,5 Gew.-Teilen Vernetzer vermischt und in eine Form gegossen. Es wurde ein Oberflächenwiderstand von 10⁶ Ohm gemessen (nach DIN IEC 60093 (12.93)).

### Beispiel 3 (Erfindung):

Es wurde wie in Beispiel 2 verfahren, allerdings wurde diesmal jeweils zwei Mal dispergiert. Die Leitfähigkeit konnte hierdurch deutlich gesteigert werden. Es wurde ein spezifischer Oberflächen-widerstand von 10⁴ Ohm nach DIN IEC 60093 (12.93) sowie ein spezifischer Durchgangswiderstand von 230 Ohm/m nach DIN IEC 60093 (12.93) gemessen.

## Patentansprüche

1. Verfahren zur Herstellung von antistatischen oder elektrisch leitfähigen Teilen / Artikeln aus duroplastischen Polyurethanen, wobei das Polyurethan erhältlich ist durch Umsetzung von organischen Polyisocyanaten (A) mit NCO-reaktive Gruppen enthaltenden Verbindungen (B), gegebenenfalls unter Verwendung von Katalysatoren und gegebenenfalls unter Zugabe von Treibmitteln und Hilfs- und/oder Zusatzstoffen, **dadurch gekennzeichnet, dass**
a) Carbon Nanotubes den NCO-reaktive Gruppen enthaltenden Verbindungen (B) und/oder den Polyisocyanaten (A) in einer Menge von 0,1 bis 15 Gew.-%, bezogen auf das Reaktionsgemisch aus Polyisocyanaten (A) und NCO-reaktive Gruppen enthaltenden Verbindungen (B) bei einer Leistungsdichte von 10² kW/m³ bis 10¹⁴ kW/m³ nach dem Rotor-Stator-Prinzip zugemischt werden, wobei die Carbon Nanotubes nach der Dispergierung mit einem Anteil von 30 bis 90 Gew.-% mit einer Teilchengröße von <40 µm vorliegen und mit einem Anteil von 10 bis 70 Gew.-% mit einer Teilchengröße von 40 bis 1000 µm vorliegen, wobei mehr als 90% der groben Teilchen einen Durchmesser von 100 bis 200 µm aufweisen,
b) die Komponenten (A) und (B) miteinander zum Reaktionsgemisch vermischt werden, wobei (A) und/oder (B) Carbon Nanotubes aus Schritt a) enthalten,
c) das Reaktionsgemisch aus b) in eine Form eingetragen oder auf ein Substrat aufgetragen wird,
d) das Polyurethan ausgehärtet wird.

2. Verfahren gemäß Anspruch 1, **dadurch gekennzeichnet, dass** den Verbindungen (B) und/oder den Polyisocyanaten (A) zusätzlich Leitruß und/oder Kohlenstofffasern zugemischt werden.

3. Verwendung der gemäß Anspruch 1 oder 2 hergestellten Polyurethane für lackierfähige, elektrisch abschirmende oder elektrostatisch ableitende Materialien.

## Claims

1. Process for producing antistatic or electrically conductive parts/articles composed of thermoset polyurethanes, where the polyurethane can be obtained by reaction of organic polyisocyanates (A) with compounds (B) containing NCO-reactive groups, optionally using catalysts and optionally with addition of blowing agents and auxiliaries and/or additives, **characterized in that**
a) carbon nanotubes are mixed into the compounds (B) containing NCO-reactive groups and/or the polyisocyanates (A) in an amount of from 0.1 to 15% by weight, based on the reaction mixture of polyisocyanates (A) and compounds (B) containing NCO-reactive groups at a power density of from 10² kW/m³ to 10¹⁴ kW/m³, according to the rotor-stator principle, where the carbon nanotubes, after dispersion, are present in a proportion of from 30 to 90% by weight having a particle size of < 40 µm and are present in a proportion of from 10 to 70% by weight having a particle size of from 40 to 1000 µm, with more than 90% of the coarse particles having a diameter of from 100 to 200 µm,
b) the components (A) and (B) are mixed with one another to give a reaction mixture, with (A) and/or (B) containing carbon nanotubes from step a),
c) the reaction mixture from b) is introduced into a mold or applied to a substrate,
d) the polyurethane is cured.

2. Process according to Claim 1, **characterized in that** conductive carbon black and/or carbon fibers are additionally mixed into the compounds (B) and/or the polyisocyanates.

3. Use of the polyurethanes produced according to Claim 1 or 2 for surface-coatable, electrically shielding or electrostatically discharging materials.

## Revendications

1. Procédé pour la préparation de pièces/objets antistatiques ou électriquement conducteurs en polyuréthanes thermodurcissables, le polyuréthane pouvant être obtenu par transformation de polyisocyanates organiques (A) avec des composés (B) contenant des groupes réactifs avec NCO, le cas échéant à l'aide de catalyseurs et le cas échéant avec addition d'agents gonflants et d'adjuvants et/ou d'additifs, **caractérisé en ce que**
a) des nanotubes de carbone sont mélangés aux composés (B) contenant des groupes réactifs avec NCO et/ou aux polyisocyanates (A) en une quantité de 0,1 à 15% en poids, par rapport au mélange réactionnel de polyisocyanates (A) et de composés (B) contenant des groupes réactifs avec NCO, à une puissance volumique de 10² kW/m³ à 10¹⁴ kW/m³ selon le principe de rotor-stator, les nanotubes de carbone se trouvant, après la dispersion, en une proportion de 30 à 90% en poids à une grosseur de particules < 40 µm et en une proportion de 10 à 70% en poids à une grosseur de particules de 40 à 1000 µm, plus de 90% des grosses particules présentant un diamètre de 100 à 200 µm,
b) les composants (A) et (B) sont mélangés l'un à l'autre en un mélange réactionnel, (A) et/ou (B) contenant les nanotubes de carbone de l'étape a),
c) le mélange réactionnel de b) est introduit dans un moule ou appliqué sur un substrat,
d) le polyuréthane est durci.

2. Procédé selon la revendication 1, **caractérisé en ce que** de la suie conductrice et/ou des fibres de carbone est/sont en outre mélangée(s) aux composés (B) et/ou aux polyisocyanates (A).

3. Utilisation des polyuréthanes préparés selon la revendication 1 ou 2 pour des matériaux pouvant être laqués, électriquement isolés ou électrostatiquement dissipatifs.
